(19) **Europäisches Patentamt / European Patent Office / Office européen des brevets**

(11) **EP 2 624 193 A1**

(12) **EUROPEAN PATENT APPLICATION**

(43) Date of publication:
**07.08.2013 Bulletin 2013/32**

(51) Int Cl.:
**G06Q 30/02** (2012.01)  **H04W 4/02** (2009.01)
**H04W 4/04** (2009.01)  **G01S 5/02** (2010.01)

(21) Application number: **13153584.1**

(22) Date of filing: **01.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.02.2012 US 201213366236**

(71) Applicant: **RapidBlue Solutions Oy**
**00100 Helsinki (FI)**

(72) Inventors:
• **Hohteri, Harri**
 **00180 Helsinki (FI)**
• **Weigh, Gavin**
 **00180 Helsinki (FI)**

(74) Representative: **Söderholm, Sampsa Petteri et al**
**Espatent Oy**
**Kaivokatu 10 D**
**00100 Helsinki (FI)**

(54) **Method and system for monitoring spatial positions of a user at retailing premises**

(57)    Spatial positions of a user in relation to one or more products at a retailing premises are monitored. The monitoring is performed for determining characteristics of the user. A system has an arrangement of stationary wireless devices deployed in respect of shelves of the retailing premises. The system interacts with a wireless communication device associated with the user in order to generate spatial location information indicative of one or more spatial positions of the wireless communication device within the retailing premises. The arrangement of stationary wireless devices is disposed in respect of the shelves to function as gates for defining corresponding one or more shelf regions. The gates are employed by the system for monitoring movement of the wireless communication device between the shelf regions and thereby in a proximity of products associated with the shelf regions, enabling optimal placement of the products in the shelves.

FIG. 2

**Description**

**Background**

**1. Field**

The present invention relates to monitoring spatial positions of one or more users in retailing premises. More particularly, although not exclusively, the method relates to monitoring spatial positions of one or more users in relation to one of more products in the retailing premises.

**2. Brief Description of Related Developments**

It is well known that operators of retailing premises stock products and arrange the products spatially within the retailing premises, for example in supermarkets, in clothes stores and the like, for enhancing sales of the products to customers. However, the customers are often mutually different in a manner in which they react to a given spatial layout of products, and hence it is desirable to monitor customer characteristics when taking decision on how to arrange the products within retailing premises. The customer characteristics are also potentially variable as a function of time of day, special festival days such as religious festivals and season of year. Contemporarily, it is often the earlier personal experience of store layout designers that is called upon by operators when stocking retailing premises with new products for seeking to optimise sales of the new products.

Sales at retailing premises can be represented by Equation 1 (Eq. 1) where:

$$ S = F(K(i), P(j), L(j), t(j), T) \qquad \text{Eq. 1} $$

summed for $0 < i < n1$, $0 < j < n2$,
wherein

$F =$     a retailing function;
$K =$     parameters describing a given customer C with index i;
$P =$     parameters describing a product Q with index j;
$L =$     spatial location of the product Q with index j;
$t =$     time spent at product Q with index j;
$T =$     time of day within year

Each of the customers C is mutually different to a lesser or greater extent, for example defined by personal taste, customer age, personal requirements and budget constraints; such difference is manifest in the parameter K. Moreover, spatial locations L of the products Q within retailing premises have an influence on customer C behaviour. For example, spatial groupings of related products Q, placement P of products Q near entrance regions of retailing premises and placement of products Q near point of sales terminal (POS) in the retailing premises may affect customer C behaviour. All such parameters can influence psychology of a given customer C and thus determine whether or not the given customer C is enticed to purchase a given product Q at a given spatial location L within the retailing premises. A task of optimising Equation 1 above is thus a highly complex task which is addressed in an approximate manner when experienced retailing staff make a best guess regarding an optimal layout for placing products Q within retailing premises.

Moreover, the placement of products Q within the retailing premises may also affect the time expended by support personnel who are managing the retailing premises. For example, operations such as loading products Q onto shelves, unloading products Q from shelves and taking stock of products Q may require different amounts of time in to execute depending on characteristics of the products Q such as dimensions, volume, weight and so forth. Since different products Q may be associated with different purchasing behaviour and different profits to the operator of the retailing premises, an optimal layout for placing the products Q that optimises time spent by support personnel is also desirable.

The problem exists of optimising where to place products Q for sale in retailing premises, where customers C walk in the retailing premises, and where they spend most of their time in the retailing premises. "Retailing premises" include stores, supermarkets, hypermarkets, shopping centres and similar.

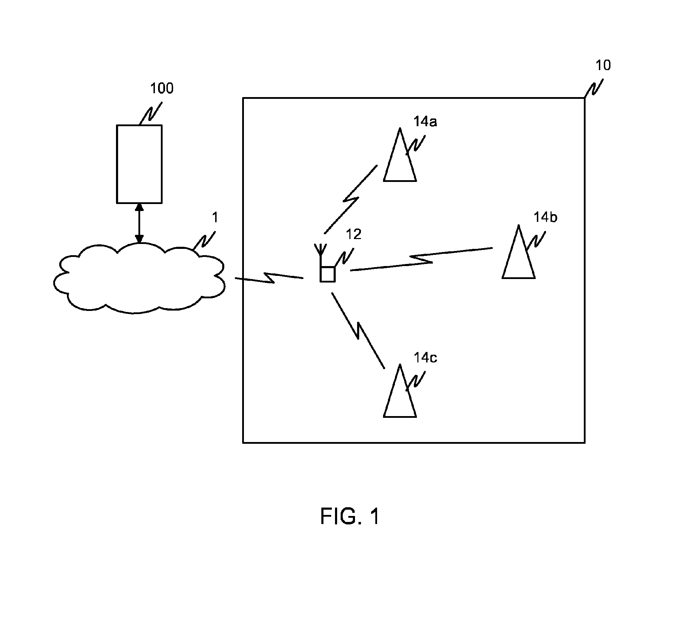

Referring to Fig. 1, an approach for analysing a store environment 10 has been to use wireless signals emitted from mobile telephones 12 to monitor indoor locations of the mobile telephones 12 within the store environment 10. Such an approach has generally required a software application, namely "App", to be installed in the mobile telephones 12 and the store environment 10 to be equipped with at least three base stations 14a, 14b, 14c installed within the store environment 10.

The at least three base stations 14a, 14b, 14c and/or the mobile telephones 12 with the software applications installed therein employ techniques such as triangulation for determining positions of the mobile telephones 12 and then communicating measured positions of the mobile telephones 12 via an Internet link 1 to a server system 100. Alternatively, triangulation may also be performed without the use of the App by utilizing one or more of a Radio Frequency Identifier (RFID) tag and/or a Wi-Fi tag embedded in the mobile telephones 12. The server system 100 is operable to execute a statistical analysis involving positions of the mobile telephones 12 as a function of time being recorded in a database of the server system 100. Optionally, the base stations 14a, 14b, 14c are based on Bluetooth, WLAN and similar for sending and/or receiving wireless communications. Triangulation techniques employed optionally include time-of-flight (TOF) measurements, measurement of received signal strengths, for example by employing a signal strength indicator (RSSI) of WLAN apparatus and so forth.

**Summary**

The aspects of the disclosed embodiments seek to provide an improved system for retailing premises which is capable of enhancing monitoring of users of the retailing premises for enabling, for example, improving of sales performance of the retailing premises.

The aspects of the disclosed embodiments also seek to provide an improved method of operating retailing systems for retailing premises which is capable of providing enhanced monitoring of users of the retailing premises for enabling, for example, improving of sales performance of the retailing premises.

According to a first aspect of the disclosed embodiments, there is provided a system for retailing premises for monitoring one or more spatial positions of a user in relation to one or more products at the retailing premises. The user may be for example, but is not limited to, a customer or one or more support personnel who manage the retailing premises. The monitoring may be performed, for example, to determine characteristics of the user. The system includes an arrangement of stationary wireless devices deployed in respect of shelves of the retailing premises. The arrangement of stationary wireless devices is operable to interact with a wireless communication device associated with the user. Furthermore, the system is operable to generate spatial location information indicative of one or more spatial positions of the wireless communication device within the retailing premises. The arrangement of stationary wireless devices is disposed in respect of the shelves to function as one or more gates for defining one or more corresponding shelf regions. The one or more gates are employed by the system for monitoring movement of the wireless communication device between the shelf regions and thereby in proximity of one or more products associated with the shelf regions.

Real time monitoring and recording of user movements is provided within the retailing premises in relation to products offered for sale at the retailing premises, without requiring an App to be installed on the wireless communication device. The monitoring of one or more spatial positions of the user may be performed with improved accuracy.

Optionally, the system for retailing premises may be characterized in that the wireless communication device is implemented as a mobile telephone. Furthermore, the mobile telephone may be loaded with a software application which is operable with the system to enable an arrangement of stationary wireless devices to be used to determine the one or more spatial positions of the wireless communication device.

Optionally, the system for retailing premises may be characterized in that the arrangement of stationary wireless devices and the wireless communication device are operable to employ near-field wireless transmissions for determining the one or more spatial positions of the wireless communication device.

Optionally, the system for retailing premises may be characterized in that the shelves are disposed in one or more aisles, and that the shelf regions are arranged in a linear concatenated manner along the one or more aisles.

Optionally, the system for retailing premises may be characterized in that a stationary wireless device belonging to the arrangement of stationary wireless devices is implemented as one or more of a beacon, a receiver, a sensor and a transceiver.

Optionally, the system for retailing premises may be characterized in that the system is operable to present one or more content on one or more output units associated with the wireless communication device based on the one or more spatial positions of the wireless communication device.

Optionally, the system for retailing premises may be characterized in that the system is operable to generate spatial location information indicative of one or more spatial positions of the wireless communication device within the retailing premises via a communication infrastructure to a server arrangement.

Optionally, the system for retailing premises may be characterized in that the system is operable to analyse time durations during which the user is in proximity of the one or more products for providing an indication of effectiveness of placing the one or more products at spatial locations within the one of more shelf regions defined by the one or more gates.

According to a second aspect of the disclosed embodiments, there is provided a method of operating a system for retailing premises for monitoring one or more spatial positions of a user in relation to one or more products at the retailing premises. The user may be for example, but is not limited to, a customer or a support personnel who manages the retailing premises. The monitoring may be performed, for example, to determine characteristics of the user. The method may be performed in a system comprising an arrangement of stationary wireless devices deployed in respect of shelves of the retailing premises. The arrangement of stationary wireless devices is operable to interact with a wireless communication device associated with the user. The method further includes generating spatial location information using the stationary wireless devices, wherein the spatial location information is indicative of one or more spatial positions of the wireless communication device. In order to generate the spatial location information, the arrangement of stationary wireless devices disposed in respect of the shelves is used to function as one or more gates for defining one or more corresponding shelf regions. Furthermore, the method involves monitoring movement of the wireless communication device between the shelf regions and thereby in a proximity of one or more products associated with the shelf regions by employing the one or more gates.

Optionally, the method is characterized in that the wireless communication device is implemented as a mobile telephone. Furthermore, the method optionally includes utilizing a software application loaded onto the mobile telephone to enable the arrangement of stationary wireless devices to be used to determine the one or more spatial positions of the wireless communication device.

Optionally, the method includes employing near-field wireless transmissions by one or more of the arrangement of stationary wireless devices and the wireless communication device in order to determine the one or more spatial positions of the wireless communication device.

Optionally, the method is characterized in that the shelves are disposed in one or more aisles, and that the shelf regions are arranged in a linear concatenated manner along the one or more aisles. Although aisles are preferred, other arrangements of the shelves other than aisles are also optionally within the scope of the present invention.

Optionally, the method is characterized in that a stationary wireless device belonging to the arrangement of stationary wireless devices is implemented as one or more of a beacon, a receiver, a sensor and a transceiver.

Optionally, the method includes presenting one or more content on one or more output units associated with the wireless communication device based on the one or more spatial positions of the wireless communication device.

Optionally, the method includes generating spatial location information indicative of one or more spatial positions of the wireless communication device within the retailing premises via a communication infrastructure to a server arrangement.

Optionally, the system for retailing premises may be characterized in that the system is operable to analyse time durations during which the user is in proximity of the one or more products for providing an indication of effectiveness of placing the one or more products at spatial locations within the one of more shelf regions defined by the one or more gates.

According to a third aspect of the disclosed embodiments, there is provided a software product recorded on machine readable data storage media, characterized in that the software product is executable upon computing hardware for implementing a method pursuant to the second aspect of the disclosed embodiments.

It will be appreciated that features and aspects of the disclosed embodiments are susceptible to being combined in various combinations without departing from the scope of the invention as defined by the appended claims.

**Description of the diagrams**

Embodiments of the disclosure will now be described, by way of example only, with reference to the following diagrams wherein:

Fig. 1    is an illustration of a prior art arrangement for monitoring a spatial location of a user within a retailing premises based upon the retailing premises r;

Fig. 2    is an illustration of a system for monitoring a spatial position of a wireless communication device within retailing premises in accordance with the disclosed embodiments;

Fig. 3    is an illustration of a system for determining a spatial position of a wireless communication device within retailing premises, wherein a position of the wireless communication device in relation to an arrangement of stationary wireless devices defining a gate is determined; and

Fig. 4    is an illustration of steps of a method of operating a system as illustrated in Fig. 2 and Fig. 3.

In the accompanying diagrams, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

**Detailed Description of the Disclosed Embodiments**

When describing embodiments of the present disclosure, it will be appreciated that mobile telephones are known in the USA as "cell phones".

In overview, the aspects of the disclosed embodiments concern a system for retailing premises. Optionally, the retailing premises are arranged in one or more aisles and the system is operable to determine a location of a user device based upon physical limitations of a locating environment defined by the one or more aisles. The location of the user is determined by employing a gating arrangement, implemented by placing one or more stationary wireless devices at ends of shelves along the one or more aisles. The one or more aisles are thus effectively subdivided therealong by the one or more stationary wireless devices into zones whose extent is defined by "gates" defined by the spatial locations of the one or more stationary wireless devices.

In retailing premises, for example in aisles of a supermarket, one or more stationary wireless devices are placed at ends of shelves, so that it can be determined whether or not a wireless communication device, for example a given mobile telephone, has passed through a gate defined by the one or more stationary wireless devices, and thereby determine whether or not the wireless communication device has moved through a given gate and thus determine a spatial position of the wireless communication device relative to the gates and hence relative to their associated one or more shelves. In a supermarket environment, physical limitations of shelves prevents a user from moving through the shelves, and hence the users must pass through the aforesaid gates. It is interesting from a brands perspective to know at which part of a shelf the user carrying an associated wireless communication device has spent most of the time; such knowledge can be deduced from considering aforesaid gates as end points of a "line", and by employing measured RSSI values in order to determine distances of the wireless communication device from ends of the shelf.

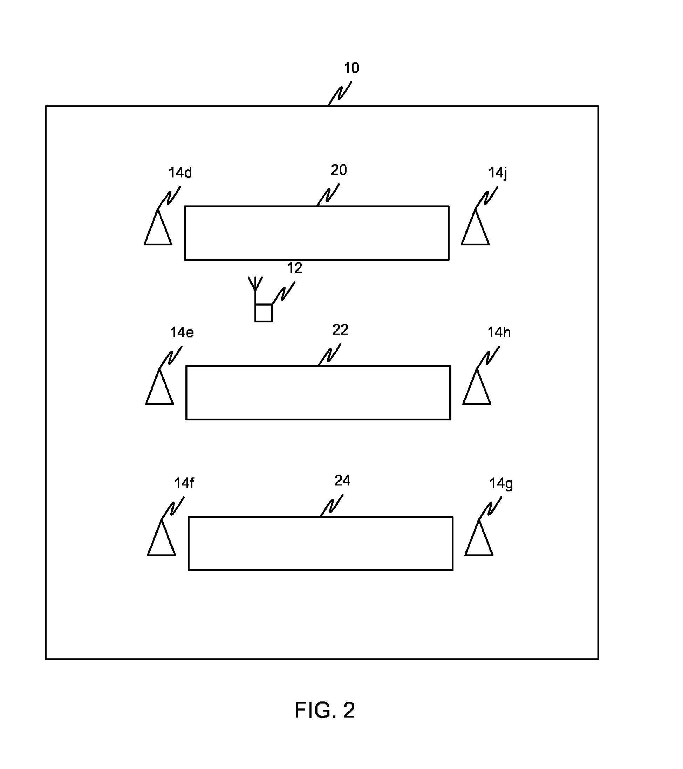

Embodiments will now be described with reference to Fig. 2. In Fig. 2, a retailing premises 10 is optionally a store, for example a shop, a supermarket, a mall, an open area market, a storage house, a large department store, for example IKEA™, GIGANTTI™, WALMART™ and so forth; "TM" denotes a trademark. In the retailing premises 10, there is included one or more shelves or racks, for example shelves 20, 22, 24. The shelf 20 is equipped with stationary wireless devices 14d, 14j at ends thereof. Similarly, the shelves 22, 24 are equipped with stationary wireless devices 14e, 14h, and 14f, 14g respectively. The shelves 20, 22, 24 are utilized by a proprietor of the retailing premises 10 to offer products, for example goods, in a convenient way. Typically, in a store business environment, certain positions along shelves are better than others for enticing a customer in a vicinity of the shelves to elect positively to select goods to be taken to a point of sale (POS). For example, ends of shelves are often regarded differently by many customers in comparison to a midpoint and a top of the shelves. As aforementioned, an optimisation problem facing an operator of the retailing premises, for example a store owner, is where to place products which results in retailing profits being enhanced, preferably maximized.

Accordingly, a system for retailing premises for monitoring one or more spatial positions of a user in relation to one or more products at the retailing premises 10 is disclosed herein. The user may be for example, but is not limited to, a customer or a support personnel who manages the retailing premises 10. Based on the monitoring, characteristics of the user may be determined. Characteristics of the user may be for example, but is not limited to, one or more time durations spent by the user at the one or more spatial positions.

In order to determine the one or more spatial positions of the user, the system includes an arrangement of stationary wireless devices 24 deployed in respect of shelves of the retailing premises 10 and operable to interact with a wireless communication device 12 associated with the user. Although Fig. 2 depicts only one wireless communication device 12, persons skilled in the art would appreciate that the system is operable for monitoring, for example concurrently, one or more spatial positions of a plurality of wireless communication devices. The wireless communication device 12 may be one or more of, but is not limited to, a mobile telephone, a mobile scanner capable of performing one or more of transmission and reception of wireless signals, a mobile computer, a transponder, a transceiver and a sensor. A stationary wireless device belonging to the arrangement of stationary wireless devices 24 may be one or more of a beacon, a receiver, a transponder, a sensor and a transceiver. Furthermore, in an embodiment, the wireless communication device 12 may be implemented as a mobile telephone loaded with a software application, such as a mobile app; "app" is a colloquial abbreviation for a software application. The mobile app is operable with the system to enable the arrangement of stationary wireless devices 24 to be used to determine the one or more spatial positions of the wireless communication device.

The arrangement of stationary wireless devices 24 is disposed in respect of the shelves to function as one or more gates for defining corresponding one or more shelf regions. In an embodiment, the shelves are optionally disposed in one or more aisles, and that the one or more shelf regions are arranged in a linear concatenated manner along the one or more aisles. For example, as depicted in Fig. 2, one or more of stationary wireless devices 14d and 14e are operable to function as a gate at a first end of the shelf region formed between the shelf 20 and the shelf 22. Similarly, one or more of stationary wireless devices 14j and 14h are operable to function as another gate at a second end of the shelf region formed between the shelf 20 and the shelf 22. The one or more gates are employed by the system for monitoring movement of the wireless communication device 12 between the one or more shelf regions and thereby in a proximity of one or more products associated with the one or more shelf regions. For instance, when the wireless communication device 12 enters the first gate of the shelf region formed between the shelf 20 and the shelf 22, one or more of stationary wireless devices 14d and 14e are operable to interact with the wireless communication device 12 to register an entry event corresponding to the entry of the wireless communication device 12 into the shelf region formed between the shelf 20 and the shelf 22. Similarly, when the wireless communication device 12 leaves the second gate of the shelf region formed between the shelf 20 and the shelf 22, one or more of stationary wireless devices 14j and 14h are operable to interact with the wireless communication device 12 to register an exit event corresponding to the exit of the wireless communication device 12 from the shelf region formed between the shelf 20 and the shelf 22. In another instance, each of the entry event and the exit event may occur at the same gate. During a time period between the entry event and the exit event, the system may are operable to determine that the wireless communication device 12 is located within the shelf region formed between the shelf 20 and the shelf 22.

The interaction between the wireless communication device 12 and the arrangement of stationary wireless devices 24 may be performed by several techniques known to persons skilled in the art. For example, in an embodiment, the wireless communication device 12 may be operable to receive a signal transmitted by the arrangement of stationary wireless devices 24 in order to determine one or more of an entry event and an exit event at the one or more gates. The signal may be, but is not limited to, a near field radio frequency signal, for example proprietary BlueTooth™. For example, referring to Fig. 2, the wireless communication device 12 may be operable to receive a signal transmitted by one or more of stationary wireless devices 14j and 14h as the wireless communication device 12 enters the shelf region formed between the shelf 20 and the shelf 22. Further, one or more of stationary wireless devices 14j and 14h may be disposed in such a manner so as to enable the wireless communication device 12 to receive a strong signal as it enters the first gate of the shelf region formed between the shelf 20 and the shelf 22. In some embodiments, signals received by the wireless communication device 12 may be filtered based on strength of the signals such as, for example, RSSI values. Consequently, weaker signals received by the wireless communication device 12 may be eliminated.

In another embodiment, the wireless communication device 12 may transmit a signal to one or more stationary wireless devices of the arrangement of stationary wireless devices 24 in order to determine one or more of an entry event and an exit event at the one or more gates. The signal may be, but is not limited to, a near field radio frequency signal. For example, referring to Fig. 2, the wireless communication device 12 may be operable to transmit a signal at periodic intervals or continuously. The signal may be, for example, a broadcast signal that the wireless communication device 12 regularly transmits to indicate its presence in a communication network. As the wireless communication device 12 enters the shelf region formed between the shelf 20 and the shelf 22, one or more of stationary wireless devices 14j and 14h may be operable to receive the signal. Furthermore, one or more of stationary wireless devices 14j and 14h may be disposed in such a manner so as to enable one or more of stationary wireless devices 14j and 14h to receive a strong signal as the wireless communication device 12 enters the first gate of the shelf region formed between the shelf 20 and the shelf 22. In some embodiments, signals received by the wireless communication device 12 may be filtered based on strength of the signals such as, for example, RSSI values. Consequently, weaker signals received by the wireless communication device 12 may be eliminated.

Thus, the interaction between the wireless communication device 12 and one or more stationary wireless devices 14 of the arrangement of stationary wireless devices 24 determines one or more of an entry event and an exit event at the one or more gates.

Upon determining the one or more of an entry event and an exit event, the system may be operable to determine one or more event data regarding one or more of the entry event and the exit event. The one or more event data may be, but are not limited to, a time stamp corresponding to the occurrence of one or more of the entry event and the exit event, an identifier associated with wireless communication device 12, an identifier of the user associated with the wireless communication device 12, one or more identifiers associated with the one or more stationary wireless devices 14 of the arrangement of stationary wireless devices 24 and one or more identifiers corresponding to the one or more gates. The determination of the one or more event data may be performed by techniques known to persons skilled in the art. For example, the wireless communication device 12 may be operable to transmit one or more of an International Mobile Subscriber Identity (IMSI), a Temporary Mobile Subscriber Identity (TMSI), a Packet Temporary Mobile Subscriber Identity (PTMSI) and an International Mobile Equipment Identity (IMEI) number associated with the wireless communication device 12 to one or more stationary wireless devices of the arrangement of stationary wireless devices 24.

Subsequent to determining the one or more event data, the system may be operable to store the one or more event data at one or more of the wireless communication device 12, one or more stationary wireless devices of the arrangement of stationary wireless devices 24 and a server arrangement. In order to store the one or more event data at the server arrangement, one or more of the wireless communication device 12 and one or more stationary wireless devices 14 of the arrangement of stationary wireless devices 24 may be operable to transmit the one or more event data to the server arrangement over a communication infrastructure such as, but limited to, intranet and Internet.

Furthermore, the system is operable to determine one or more spatial positions of the wireless communication device 12 within a shelf region of the one or more shelf regions. For example, referring to Fig. 2, in addition to determining that the wireless communication device 12 is situated in the shelf region formed between the shelf 20 and the shelf 22, the system may be operable to determine one or more spatial positions of the wireless communication device 12 within the shelf region formed between the shelf 20 and the shelf 22.

In order to determine the one or more spatial positions of the wireless communication device 12 within a shelf region, the system is operable to employ interaction between the wireless communication device 12 and one or more stationary wireless devices of the arrangement of stationary wireless devices 24. For instance, referring to Fig. 2, an interaction between the wireless communication device 12 and one or more of stationary wireless devices 14d and 14e may be employed in order to determine a spatial position of the wireless communication device 12 within the shelf region formed between the shelf 20 and the shelf 22.

The interaction between the wireless communication device 12 and the one or more stationary wireless devices 14 may be performed by several techniques known to persons skilled in the art. For example, in an embodiment, the wireless communication device 12 may be operable to receive a signal transmitted by the one or more stationary wireless devices 14 in order to determine the one or more spatial positions of the wireless communication device 12. The signal may be, but is not limited to, a near field radio frequency signal. For example, referring to Fig. 2, the wireless communication device 12 may be operable to receive a signal transmitted by one or more of stationary wireless devices 14d and 14j while the wireless communication device 12 is located within the shelf region formed between the shelf 20 and the shelf 22. In another instance, the wireless communication device 12 may be operable to receive a signal transmitted by one or more of stationary wireless devices 14d, 14e, 14f, 14g, 14h and 14j, while the wireless communication device 12 is located within the shelf region formed between the shelf 20 and the shelf 22. Subsequent to receiving the signal transmitted by the one or more stationary wireless devices 14, the system is operable to determine the one or more spatial positions of the wireless communication device 12 based on characteristics of the received signal such as but not limited, amplitude, frequency and phase.

In another embodiment, the wireless communication device 12 may be operable to transmit a signal to one or more stationary wireless devices 14 of the arrangement of stationary wireless devices 24 in order to determine the one or more spatial positions of the wireless communication device 12. The signal may be, but is not limited to, a near field radio frequency signal. For example, referring to Fig. 2, the wireless communication device 12 may be operable to transmit a signal at periodic intervals or continuously. The signal may be, for example, a broadcast signal that the wireless communication device 12 regularly transmits to indicate its presence in a communication network. For instance, while the wireless communication device 12 is located within the shelf region formed between the shelf 20 and the shelf 22, the one or more of stationary wireless devices 14d and 14j may be operable to receive the signal. In another instance, the wireless communication device 12 may be operable to transmit a signal to one or more of stationary wireless devices 14d, 14e, 14f, 14g, 14h and 14j while the wireless communication device is located within the shelf region formed between the shelf 20 and the shelf 22. Subsequent to receiving the signal transmitted by the wireless communication device 12, the system is operable to determine the one or more spatial positions of the wireless communication device 12 based on characteristics of the received signal such as, but not limited, amplitude, frequency and phase.

Subsequent to determining the one or more spatial positions, the system may be operable to store the one or more spatial positions at one or more of the wireless communication device 12, one or more stationary wireless devices of the arrangement of stationary wireless devices 24 and a server arrangement. In order to store the one or more spatial positions at the server arrangement, one or more of the wireless communication device 12 and one or more stationary wireless devices of the arrangement of stationary wireless devices 24 may be operable to transmit the one or more spatial positions to the server arrangement over a communication infrastructure such as, but limited to, intranet and internet.

Furthermore, the system is operable to monitor the one or more spatial positions at regular time intervals or continuously. As a result, the system is capable of determining the time durations spent by a user associated with the wireless communication device 12 at the one or more spatial positions. Moreover, the system is operable to analyse time durations during which the user is in proximity of the one or more products for providing an indication of effectiveness of placing the one or more products at spatial locations within the one of more shelf regions defined by the one or more gates.

Furthermore, based on the one or more spatial positions of the wireless communication device 12, the system is operable to present one or more content on one or more output units associated with the wireless communication device 12. The one or more output units may include, but are not limited to, display device, audio speaker, printer and electro-mechanical actuators. The one or more content may include, but is not limited to, information targeted to support personnel, information targeted to a customer. The information targeted to a customer may include one or more of, but is not limited to, advertisements, promotional offers and additional details related to products in the vicinity of the one or more spatial positions.

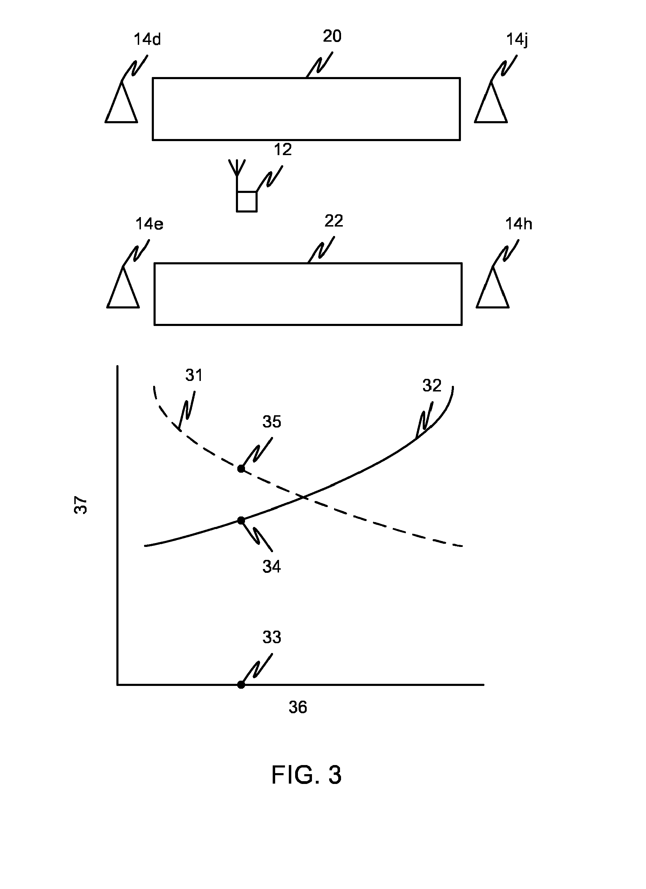

Fig. 3 is an illustration of a system for determining spatial positions of a wireless communication device 12 within retailing premises 10, wherein a position of the wireless communication device 12 is determined in relation to an arrangement of stationary wireless devices 24 defining one or more gates. As illustrated, the system includes a plurality of shelves, for example, the shelf 20 and the shelf 22. Further, an arrangement of stationary wireless devices 24, for example, wireless stationary devices 14d, 14e, 14h and 14j, are disposed in the retailing premises 10. The arrangement of stationary wireless devices 24 is disposed in respect of the shelves to function as one or more gates for defining corresponding one or more shelf regions. In an embodiment, the shelves are optionally disposed in one or more aisles, and that the one or more shelf regions are arranged in a linear concatenated manner along the one or more aisles. For example, as depicted in Fig. 3, one or more of stationary wireless devices 14d and 14e are operable to function as a gate at a first end of the shelf region formed between the shelf 20 and the shelf 22. Similarly, one or more of stationary wireless devices 14j and 14h are operable to function as another gate at a second end of the shelf region formed between the shelf 20 and the shelf 22. The one or more gates are employed by the system for monitoring movement of the wireless communication device 12 between the one or more shelf regions and thereby in a proximity of one or more products associated with the one or more shelf regions. By monitoring the movement of the wireless communication device 12 the system is capable of identifying the shelf region in which the wireless communication device 12 is located. This is explained in detail in conjunction with Fig. 2.

In addition to identifying the shelf region, the system is operable to determine a spatial position of the wireless communication device 12 within the shelf region. For example, referring to Fig. 3, in addition to determining that the wireless communication device 12 is situated in the shelf region formed between the shelf 20 and the shelf 22, the system may be operable to determine one or more spatial positions of the wireless communication device 12 within the shelf region formed between the shelf 20 and the shelf 22.

In order to determine the one or more spatial positions of the wireless communication device 12 within a shelf region, the system is operable to employ interaction between the wireless communication device 12 and one or more stationary wireless devices of the arrangement of stationary wireless devices 24. For instance, referring to Fig. 3, an interaction between the wireless communication device 12 and one or more of stationary wireless devices 14d and 14e may be employed in order to determine a spatial position of the wireless communication device 12 within the shelf region formed between the shelf 20 and the shelf 22.

The interaction between the wireless communication device 12 and the one or more stationary wireless devices 24 may be performed by several techniques known to persons skilled in the art. For example, in an embodiment, the wireless communication device 12 may be operable to receive a signal transmitted by the one or more stationary wireless devices 14 in order to determine the one or more spatial positions of the wireless communication device 12. The signal may be, but is not limited to, a near field radio frequency signal. For example, referring to Fig. 3, the wireless communication device 12 may be operable to receive a signal transmitted by one or more of stationary wireless devices 14d and 14j while the wireless communication device 12 is located within the shelf region formed between the shelf 20 and the shelf 22. In another instance, the wireless communication device 12 may receive a signal transmitted by one or more of stationary wireless devices 14d, 14e, 14f, 14g, 14h and 14j, while the wireless communication device is located within the shelf region formed between the shelf 20 and the shelf 22. Subsequent to receiving the signal transmitted by the one or more stationary wireless devices 14, the system is operable to determine the one or more spatial positions of the wireless communication device 12 based on characteristics of the received signal such as but not limited, amplitude, frequency and phase.

In an embodiment, as illustrated in Fig. 3, the system is operable to determine the one or more spatial positions based on signal strength, such as, Received Signal Strength Indicator (RSSI) of one or more signals received at the wireless communication device 12. As illustrated in the graph in Fig. 3, the signal strength received varies along the shelf region formed by the shelf 20 and the shelf 22. The x-axis 36 of the graph represents distance while the y-axis 37 represents signal strength of a received signal. For instance, the curve 32 illustrates an exemplary variation of signal strength received by wireless communication device 12 from one or more of stationary wireless devices 14h and 14j along various positions in the shelf region. Similarly, the curve 31 illustrates an exemplary variation of signal strength received by the wireless communication device 12 from one or more of stationary wireless devices 14d and 14e along various positions in the shelf region. Accordingly, a measure of one or more signal strength values of one or more signals received at the wireless communication device 12 may be used to determine the position of the wireless communication device 12 along a shelf region. For example, as illustrated, when the wireless communication device 12 is located at a distance 33 from the gate formed by one or more of stationary wireless devices 14d and 14e, the wireless communication device 12 receives a signal having signal strength value 34 from one or more of stationary wireless devices 14j and 14h. Likewise, at the same distance 33 from the gate formed by one or more of stationary wireless devices 14d and 14e, the wireless communication device 12 receives a signal having signal strength value 35 from one or more of stationary wireless devices 14d and 14e. Consequently, the system is operable to determine the spatial position of the wireless communication device 12 based on one or more of signal strength value 34 and signal strength value 35.

In another embodiment, the wireless communication device 12 may be operable to transmit a signal to one or more stationary wireless devices 14 of the arrangement of stationary wireless devices 24 in order to determine the one or more spatial positions of the wireless communication device 12. The signal may be, but is not limited to, a near field radio frequency signal. For example, referring to Fig. 3, the wireless communication device 12 may be operable to transmit a signal at periodic intervals or continuously. The signal may be, for example, a broadcast signal that the wireless communication device 12 regularly transmits to indicate its presence in a communication network. For instance, while the wireless communication device 12 is located within the shelf region formed between the shelf 20 and the shelf 22, one or more of stationary wireless devices 14d and 14j may be operable to receive the signal. In another instance, the wireless communication device 12 may be operable to transmit a signal to one or more of stationary wireless devices 14d, 14e, 14f, 14g, 14h and 14j while the wireless communication device is located within the shelf region formed between the shelf 20 and the shelf 22. Subsequent to receiving the signal transmitted by the wireless communication device 12, the system is operable to determine the one or more spatial positions of the wireless communication device 12 based on characteristics of the received signal such as but not limited, amplitude, frequency and phase.

In an embodiment, as illustrated in Fig. 3, the system may be operable to determine the one or more spatial positions based on signal strength, such as, Received Signal Strength Indicator (RSSI) of one or more signals received at one or more stationary wireless devices 14d, 14e, 14h and 14j. As illustrated in the graph in Fig. 3, the signal strength received varies along the shelf region formed by the shelf 20 and the shelf 22. For instance, the curve 32 illustrates an exemplary variation of signal strength of one or more signals received from wireless communication device 12 at one or more of stationary wireless devices 14h and 14j corresponding to various positions of the wireless communication device 12 along the shelf region. Similarly, the curve 31 illustrates an exemplary variation of signal strength of one or more signals received from the wireless communication device 12 at one or more of stationary wireless devices 14d and 14e corresponding to various positions of the wireless communication device 12 along the shelf region. Accordingly, a measure of one or more signal strength values of one or more signals received from the wireless communication device 12 may be used to determine the position of the wireless communication device 12 along the shelf region. For example, as illustrated, when the wireless communication device 12 is located at a distance 33 from the gate formed by one or more of stationary wireless devices 14d and 14e, a signal having signal strength value 34 is received at one or more of stationary wireless devices 14j and 14h. Likewise, at the same distance 33 from the gate formed by one or more of stationary wireless devices 14d and 14e, one or more of stationary wireless devices 14d and 14e receive a signal having signal strength value 35 from the wireless communication device 12. Consequently, the system is operable to determine the spatial position of the wireless communication device 12 based on one or more of signal strength value 34 and signal strength value 35.

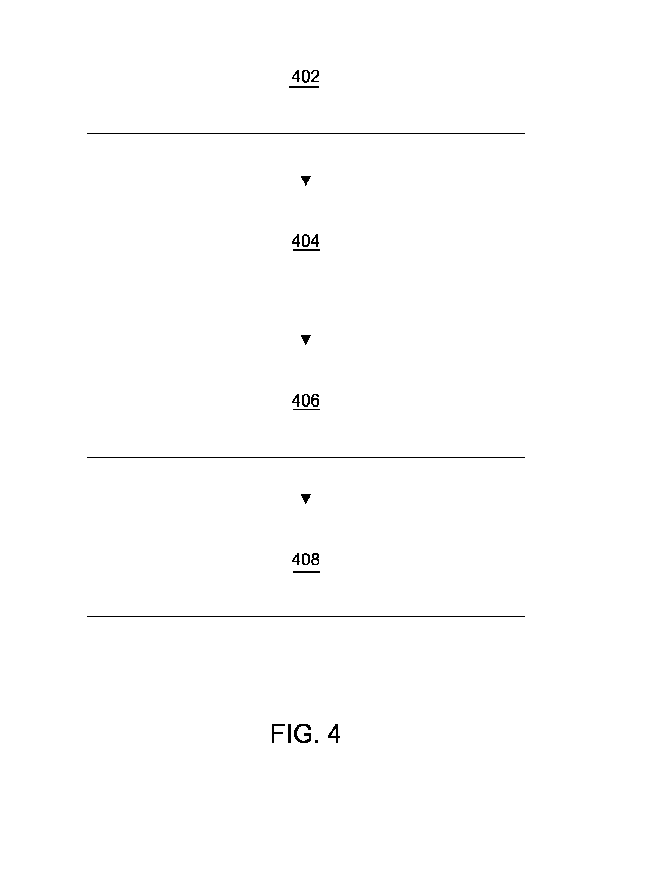

Referring now to Fig. 4, a method of operating a system for retailing premises 10 for monitoring one or more spatial positions of a user in relation to one or more products at the retailing premises 10 is illustrated. The user may be for example, but is not limited to, a customer or a support personnel who manages the retailing premises 10. Based on the monitoring, characteristics of the user may be determined. Characteristics of the user may be for example, but is not limited to, one or more time durations spent by the user at the one or more spatial positions.

In order to determine the one or more spatial positions of the user, the method includes a step 402 for deploying an arrangement of stationary wireless devices 24 of the system in respect of shelves of the retailing premises 10, wherein the arrangement of stationary wireless devices 24 is operable to interact with a wireless communication device 12. The wireless communication device 12 may be one or more of, but is not limited to, a mobile telephone, a mobile scanner capable of performing one or more of transmission and reception of wireless signals, a mobile computer, a transponder, a transceiver and a sensor. A stationary wireless device belonging to the arrangement of stationary wireless devices 24 may be one or more of a beacon, a receiver, a transponder, a sensor and a transceiver. Further, in an embodiment, the wireless communication device 12 may be implemented as a mobile telephone loaded with a software application, such as a mobile app. The mobile app is operable with the system to enable the arrangement of stationary wireless devices 24 to be used to determine the one or more spatial positions of the wireless communication device 12.

Further, the method includes a step 404 for generating spatial location information using the stationary wireless devices 14, wherein the spatial location information is indicative of one or more spatial positions of the wireless communication device 12.

Additionally, the method includes a step 406 for disposing the arrangement of stationary wireless devices 24 in respect of the shelves to function as one or more gates for defining one or more corresponding shelf regions. Furthermore, the method includes a step 408 for monitoring movement of the wireless communication device 12 between the shelf regions and thereby in a proximity of one or more products associated with the shelf regions by employing the one or more gates.

In an embodiment, the shelves are optionally disposed in one or more aisles, and that the one or more shelf regions are arranged in a linear concatenated manner along the one or more aisles. For example, as depicted in Fig. 2, one or more of stationary wireless devices 14d and 14e function as a gate at a first end of the shelf region formed between the shelf 20 and the shelf 22. Similarly, one or more of stationary wireless devices 14j and 14h function as another gate at a second end of the shelf region formed between the shelf 20 and the shelf 22. The one or more gates are employed by the system for monitoring movement of the wireless communication device 12 between the one or more shelf regions and thereby in a proximity of one or more products associated with the one or more shelf regions.

For instance, when the wireless communication device 12 enters the first gate of the shelf region formed between the shelf 20 and the shelf 22, one or more of stationary wireless devices 14d and 14e interact with the wireless communication device 12 to register an entry event corresponding to the entry of the wireless communication device 12 into the shelf region formed between the shelf 20 and the shelf 22. Similarly, when the wireless communication device 12 leaves the second gate of the shelf region formed between the shelf 20 and the shelf 22, one or more of stationary wireless devices 14j and 14h interact with the wireless communication device 12 to register an exit event corresponding to the exit of the wireless communication device 12 from the shelf region formed between the shelf 20 and the shelf 22. In another instance, each of the entry event and the exit event may occur at the same gate. During a time period between the entry event and the exit event, the wireless communication device 12 may be determined to be located within the shelf region formed between the shelf 20 and the shelf 22.

The interaction between the wireless communication device 12 and the arrangement of stationary wireless devices 24 may be performed by several techniques known to persons skilled in the art. For example, in an embodiment, the wireless communication device 12 may receive a signal transmitted by the arrangement of stationary wireless devices 24 in order to determine one or more of an entry event and an exit event at the one or more gates. The signal may be, but is not limited to, a near field radio frequency signal. For example, referring to Fig. 2, the wireless communication device 12 may receive a signal transmitted by one or more of stationary wireless devices 14j and 14h as the wireless communication device 12 enters the shelf region formed between the shelf 20 and the shelf 22. Further, one or more of stationary wireless devices 14j and 14h may be disposed in such a manner so as to enable the wireless communication device 12 to receive a strong signal as it enters the first gate of the shelf region formed between the shelf 20 and the shelf 22. In some embodiments, signals received by the wireless communication device 12 may be filtered based on strength of the signals such as, for example, RSSI values. Consequently, weaker signals received by the wireless communication device 12 may be eliminated.

In another embodiment, the wireless communication device 12 may transmit a signal to one or more stationary wireless devices 14 of the arrangement of stationary wireless devices 24 in order to determine one or more of an entry event and an exit event at the one or more gates. The signal may be, but is not limited to, a near field radio frequency signal. For example, referring to Fig. 2, the wireless communication device 12 may transmit a signal at periodic intervals or continuously. The signal may be, for example, a broadcast signal that the wireless communication device 12 regularly transmits to indicate its presence in a communication network. As the wireless communication device 12 enters the shelf region formed between the shelf 20 and the shelf 22 the signal may be received by one or more of stationary wireless devices 14j and 14h. Furthermore, one or more of stationary wireless devices 14j and 14h may be disposed in such a manner so as to enable one or more of stationary wireless devices 14j and 14h to receive a strong signal as the wireless communication device 12 enters the first gate of the shelf region formed between the shelf 20 and the shelf 22. In some embodiments, signals received by the wireless communication device 12 may be filtered based on strength of the signals such as, for example, RSSI values. Consequently, weaker signals received by the wireless communication device 12 may be eliminated.

Thus, the interaction between the wireless communication device 12 and one or more stationary wireless devices 14 of the arrangement of stationary wireless devices 24 determines one or more of an entry event and an exit event at the one or more gates.

Upon determining the one or more of an entry event and an exit event, the method may further determine one or more event data regarding one or more of the entry event and the exit event. The one or more event data may be, but are not limited to, a time stamp corresponding to the occurrence of one or more of the entry event and the exit event, an identifier associated with the wireless communication device 12, an identifier of the user associated with the wireless communication device 12, one or more identifiers associated with the one or more stationary wireless devices 14 of the arrangement of stationary wireless devices 24 and one or more identifiers corresponding to the one or more gates. The determination of the one or more event data may be performed by techniques known to persons skilled in the art. For example, the wireless communication device 12 may be operable to transmit one or more of an International Mobile Subscriber Identity (IMSI), a Temporary Mobile Subscriber Identity (TMSI), a Packet Temporary Mobile Subscriber Identity (PTMSI) and an International Mobile Equipment Identity (IMEI) number associated with the wireless communication device 12 to one or more stationary wireless devices 14 of the arrangement of stationary wireless devices 24.

Subsequent to determining the one or more event data, the one or more event data may be stored at one or more of the wireless communication device 12, one or more stationary wireless devices 14 of the arrangement of stationary wireless devices 24 and a server arrangement. In order to store the one or more event data at the server arrangement, one or more of the wireless communication device 12 and one or more stationary wireless devices 14 of the arrangement of stationary wireless devices 24 may transmit the one or more event data to the server arrangement over a communication infrastructure such as, but limited to, intranet and Internet.

Furthermore, the method determines one or more spatial positions of the wireless communication device 12 within a shelf region of the one or more shelf regions. For example, referring to Fig. 2, in addition to determining that the wireless communication device 12 is situated in the shelf region formed between the shelf 20 and the shelf 22, the method may determine one or more spatial positions of the wireless communication device 12 within the shelf region formed between the shelf 20 and the shelf 22.

In order to determine the one or more spatial positions of the wireless communication device 12 within a shelf region, the method may employ interaction between the wireless communication device 12 and one or more stationary wireless devices of the arrangement of stationary wireless devices 24. For instance, referring to Fig. 2, an interaction between the wireless communication device 12 and one or more of stationary wireless devices 14d and 14e may be employed in order to determine a spatial position of the wireless communication device 12 within the shelf region formed between the shelf 20 and the shelf 22.

The interaction between the wireless communication device 12 and the one or more stationary wireless devices 14 may be performed by several techniques known to persons skilled in the art. For example, in an embodiment, the wireless communication device 12 may receive a signal transmitted by the one or more stationary wireless devices 14 in order to determine the one or more spatial positions of the wireless communication device 12. The signal may be, but is not limited to, a near field radio frequency signal. For example, referring to Fig. 2, the wireless communication device 12 may receive a signal transmitted by one or more of stationary wireless devices 14d and 14j, while the wireless communication device is located within the shelf region formed between the shelf 20 and the shelf 22. In another instance, the wireless communication device 12 may receive a signal transmitted by one or more of stationary wireless devices 14d, 14e, 14f, 14g, 14h and 14j, while the wireless communication device is located within the shelf region formed between the shelf 20 and the shelf 22. Subsequent to receiving the signal transmitted by the one or more stationary wireless devices 14, the method may determine the one or more spatial positions of the wireless communication device 12 based on characteristics of the received signal such as but not limited to, amplitude, frequency and phase.

In another embodiment, the wireless communication device 12 may transmit a signal to one or more stationary wireless devices of the arrangement of stationary wireless devices 24 in order to determine the one or more spatial positions of the wireless communication device 12. The signal may be, but is not limited to, a near field radio frequency signal. For example, referring to Fig. 2, the wireless communication device 12 may transmit a signal at periodic intervals or continuously. The signal may be, for example, a broadcast signal that the wireless communication device 12 regularly transmits to indicate its presence in a communication network. For instance, while the wireless communication device 12 is located within the shelf region formed between the shelf 20 and the shelf 22, the signal may be received by one or more of stationary wireless devices 14d and 14j. In another instance, the wireless communication device 12 may transmit a signal to one or more of stationary wireless devices 14d, 14e, 14f, 14g, 14h and 14j while the wireless communication device is located within the shelf region formed between the shelf 20 and the shelf 22. Subsequent to receiving the signal transmitted by the wireless communication device 12, the method may determine the one or more spatial positions of the wireless communication device 12 based on characteristics of the received signal such as but not limited, amplitude, frequency and phase.

Subsequent to determining the one or more spatial positions, the one or more spatial positions may be stored at one or more of the wireless communication device 12, one or more stationary wireless devices 14 of the arrangement of stationary wireless devices 24 and a server arrangement. In order to store the one or more spatial positions at the server arrangement, one or more of the wireless communication device 12 and one or more stationary wireless devices of the arrangement of stationary wireless devices 24 may transmit the one or more spatial positions to the server arrangement over a communication infrastructure such as, but limited to, intranet and internet.

Furthermore, the method may monitor the one or more spatial positions at regular time intervals or continuously. As a result, the method is capable of determining the time durations spent by a user associated with the wireless communication device 12 at the one or more spatial positions. Moreover, the method may analyse time durations during which the user is in proximity of the one or more products for providing an indication of effectiveness of placing the one or more products at spatial locations within the one of more shelf regions defined by the one or more gates.

Furthermore, based on the one or more spatial positions of the wireless communication device 12, the method may present one or more content on one or more output units associated with the wireless communication device 12. The one or more output units may include, but are not limited to, display device, audio speaker, printer and electro-mechanical actuators. The one or more content may include, but is not limited to, information targeted to support personnel, information targeted to a customer. The information targeted to a customer may include one or more of, but is not limited to, advertisements, promotional offers and additional details related to products in the vicinity of the one or more spatial positions, for example price of products and/or special product promotions.

Further disclosed herein is a software product recorded on machine-readable data storage media, characterized in that the software product is executable upon a computing hardware for implementing a method as described in conjunction with Fig. 4.

Modifications to embodiments described in the foregoing are possible without departing from the scope of the invention as defined by the accompanying claims.

**Claims**

1. A system for retailing premises for monitoring one or more spatial positions of a user in relation to one or more products at the retailing premises and for determining therefrom characteristics of the user, wherein:

   the system comprises an arrangement of stationary wireless devices (24) deployed in respect of shelves of the retailing premises and operable to interact with a wireless communication device (12) associated with the user, the system is configured to generate spatial location information indicative of one or more spatial positions of the wireless communication device (12) within the retailing premises;
   the arrangement of stationary wireless devices (24) being disposed in respect of the shelves and configured to function as one or more gates for defining corresponding one or more shelf regions; and
   the system being configured, employing the one or more gates, to monitor movement of the wireless communication device (12) between the one or more shelf regions and thereby in a proximity of one or more products associated with the shelf regions.

2. The system as claimed in claim 1, wherein the wireless communication device (12) is implemented as a mobile telephone provided with a software application loaded thereonto which is operable with the system to determine the one or more spatial positions of the wireless communication device (12) using the arrangement of stationary wireless devices (24).

3. The system as claimed in claim 1 or 2, wherein the arrangement of stationary wireless devices (24) and the wireless communication device (12) are operable to employ near-field wireless transmissions for determining the one or more spatial positions of the wireless communication device (12).

4. The system as claimed in any of preceding claims, wherein the system is adapted to operate with the shelves being disposed in one or more aisles, and the one or more shelf regions being arranged in a linear concatenated manner along the one or more aisles.

5. The system as claimed in any of preceding claims, wherein a stationary wireless device (24) belonging to the arrangement of stationary wireless devices is implemented as one or more of a beacon, a receiver, a sensor and a transceiver.

6. The system as claimed in any of preceding claims, wherein the system is operable to present one or more content on one or more output units associated with the wireless communication device (12) based on the one or more spatial positions of the wireless communication device.

7. The system as claimed in any of preceding claims, wherein the system is operable to generate spatial location information indicative of one or more spatial positions of the wireless communication device (12) within the retailing premises via a communication infrastructure to a server arrangement.

8. The system as claimed in any of preceding claims, wherein the system is operable to analyse time durations during which the user is in proximity of the one or more products for providing an indication of effectiveness of placing the one or more products at spatial locations within the one of more shelf regions defined by the one or more gates.

9. A method of operating a system for retailing premises for monitoring one or more spatial positions of a user in relation to one or more products at the retailing premises and for determining therefrom user characteristics in a system comprising an arrangement of stationary wireless devices of the system in respect of shelves of the retailing premises, wherein the arrangement of stationary wireless devices is operable to interact with a wireless communication device; the method comprising:

   generating spatial location information using the stationary wireless devices, wherein the spatial location information is indicative of one or more spatial positions of the wireless communication device,
   using the arrangement of stationary wireless devices disposed in respect of the shelves to function as one or more gates for defining corresponding one or more shelf regions, and
   monitoring movement of the wireless communication device between the one or more shelf regions and thereby in a proximity of one or more products associated with the one or more shelf regions by employing the one or more gates.

**10.** The method as claimed in claim 9, wherein the method further comprises implementing the wireless communication device as a mobile telephone and determining by the mobile telephone with the system the one or more spatial positions of the wireless communication device using the arrangement of stationary wireless devices.

**11.** The method as claimed in claim 9 or 10, wherein the method further comprises sending the generated spatial location information to a server arrangement via a communication infrastructure.

**12.** A software product recorded on machine-readable data storage media for controlling operating of a system for retailing premises for monitoring one or more spatial positions of a user in relation to one or more products at the retailing premises and for determining therefrom user characteristics, the system comprising an arrangement of stationary wireless devices deployed in respect of shelves of the retailing premises, which arrangement is operable to interact with a wireless communication device (12), the software product comprising computer executable program code configured to cause computing hardware to perform:

generating spatial location information using the stationary wireless devices (24), wherein the spatial location information is indicative of one or more spatial positions of the wireless communication device (12), disposing the arrangement of stationary wireless devices (24) in respect of the shelves to function as one or more gates for defining corresponding one or more shelf regions, and monitoring movement of the wireless communication device (12) between the one or more shelf regions and thereby in a proximity of one or more products associated with the one or more shelf regions by employing the one or more gates; when executing the software product.

**13.** The software product as claimed in claim 12, further comprising computer executable program code configured to cause computing hardware to perform:

presenting one or more content on one or more output units associated with the wireless communication device based on the one or more spatial positions of the wireless communication device, when executing the software product.

**14.** The software product as claimed in claim 12 or 13, further comprising computer executable program code configured to cause computing hardware to perform:

generating spatial location information indicative of one or more spatial positions of the wireless communication device within the retailing premises via a communication infrastructure to a server arrangement, when executing the software product.

**15.** The software product as claimed in any of claims 12 to 14, further comprising computer executable program code configured to cause computing hardware to perform:

analysing time durations during which the user is in proximity of the one or more products for providing an indication of effectiveness of placing the one or more products at spatial locations within the one of more shelf regions defined by the one or more gates, when executing the software product.

FIG. 1

FIG. 2

14d

20

14j

12

14e

22

14h

31

35

32

37

34

33

36

FIG. 3

FIG. 4

Europäisches
Patentamt

European
Patent Office

Office européen
des brevets

# EUROPEAN SEARCH REPORT

Application Number

EP 13 15 3584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/240571 A1 (BONNER BRETT BRACEWELL [US] ET AL) 24 September 2009 (2009-09-24) <br> * abstract * <br> * paragraph [0002] - paragraph [0006] * <br> * paragraph [0011] - paragraph [0016] * <br> * paragraph [0043] - paragraph [0070] * <br> * paragraph [0084] - paragraph [0105] * <br> * paragraph [0120] - paragraph [0121] * <br> * figures 5, 6A, 9 * | 1-15 | INV. <br> G06Q30/02 <br> H04W4/02 <br> H04W4/04 <br> G01S5/02 |
| X | US 2009/298514 A1 (ULLAH SHAH [US]) 3 December 2009 (2009-12-03) <br> * abstract * <br> * paragraph [0005] - paragraph [0009] * <br> * paragraph [0022] - paragraph [0031] * <br> * paragraph [0089] - paragraph [0104] * <br> * paragraph [0132] * <br> * paragraph [0167] - paragraph [0174] * | 1-15 | |
| X | EP 1 895 462 A1 (ACCENTURE GLOBAL SERVICES GMBH [CH]) 5 March 2008 (2008-03-05) <br> * paragraph [0020] - paragraph [0024] * <br> * paragraph [0029] * <br> * paragraph [0055] * <br> * paragraph [0082] - paragraph [0085]; figure 2 * | 1-15 | TECHNICAL FIELDS SEARCHED (IPC) <br><br> G01S <br> G06Q <br> H04W |
| X | EP 1 811 426 A2 (HITACHI LTD [JP]) 25 July 2007 (2007-07-25) <br> * abstract * <br> * paragraph [0006] - paragraph [0011] * <br> * paragraph [0014] - paragraph [0016]; figure 1 * <br> * paragraph [0034] * <br> * paragraph [0039] * <br> * paragraph [0051] - paragraph [0052] * <br> * paragraph [0058] * | 1-15 | |

The present search report has been drawn up for all claims

| Place of search | Date of completion of the search | Examiner |
|---|---|---|
| Munich | 23 May 2013 | Haugg, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 15 3584

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2013

| Patent document cited in search report | | Publication date | Patent family member(s) | | Publication date |
|---|---|---|---|---|---|
| US 2009240571 | A1 | 24-09-2009 | CA | 2709757 A1 | 24-09-2009 |
| | | | US | 2009240571 A1 | 24-09-2009 |
| | | | US | 2010262513 A1 | 14-10-2010 |
| | | | US | 2012245974 A1 | 27-09-2012 |
| | | | WO | 2009117162 A1 | 24-09-2009 |
| US 2009298514 | A1 | 03-12-2009 | US | 2009298514 A1 | 03-12-2009 |
| | | | US | 2012323685 A1 | 20-12-2012 |
| EP 1895462 | A1 | 05-03-2008 | CA | 2600101 A1 | 29-02-2008 |
| | | | EP | 1895462 A1 | 05-03-2008 |
| | | | EP | 2302578 A1 | 30-03-2011 |
| | | | US | 2008059297 A1 | 06-03-2008 |
| EP 1811426 | A2 | 25-07-2007 | EP | 1811426 A2 | 25-07-2007 |
| | | | JP | 2007193507 A | 02-08-2007 |
| | | | US | 2007229265 A1 | 04-10-2007 |

EPO FORM P0459

For more details about this annex : see Official Journal of the European Patent Office, No. 12/82